# FASCICULE DE BREVET EUROPEEN

(11) **EP 0 811 314 B1**
(45) Date de publication et mention de la délivrance du brevet: **29.08.2001**
(21) Numéro de dépôt: 97440048.3
(22) Date de dépôt: 03.06.1997
(51) Int. Cl.: A01D 75/20, A01D 78/10

(54) **Machine agricole**
Landmaschine
Agricultural machine

(30) Priorité: 07.06.1996 FR 9607257
(43) Date de publication de la demande: 10.12.1997
(73) Titulaire: KUHN S.A., 67700 Saverne (FR)
(72) Inventeur: Demanet, Didier, 57444 Reding (FR); Schneider, Pierre, 67700 Saverne (FR)
(74) Mandataire: Andres, Jean-Claude

(56) Documents cités:
- EP-A- 0 439 068
- EP-A- 0 558 430
- EP-A- 0 622 010
- EP-A- 0 655 188
- EP-A- 0 677 241
- FR-A- 2 355 440

## Description

La présente invention se rapporte à une machine agricole, notamment une andaineuse de fourrage, comportant une structure portant au moins une roue râteleuse, laquelle roue râteleuse possède un boîtier central qui est muni de bras porte-outils et qui est monté sur un axe support sensiblement vertical de manière à pouvoir tourner sur celui-ci, ce boîtier portant une couronne dentée qui engrène avec un pignon d'entraînement en vue d'assurer l'entraînement en rotation, ladite structure portant également un verrou servant à immobiliser la roue râteleuse notamment durant le transport et un dispositif de protection qui entoure partiellement ou totalement ladite roue râteleuse et qui comporte au moins une partie latérale repliable, des moyens de commande étant reliés audit verrou et à chacune des parties latérales repliables du dispositif de protection.

Le repliage de la ou des parties latérales du dispositif de protection permet d'obtenir une réduction de la largeur de la machine au transport. Dans ce même but il est parfois possible de démonter ou de replier un ou plusieurs bras porte-outils. Dans cette position, il est nécessaire d'empêcher toute mise en rotation de la roue râteleuse, soit intentionnelle soit par inadvertance, afin d'éviter tout risque d'accident.

Sur une machine connue dans le brevet FR- 2 355 440, la partie repliable du dispositif de protection comporte un verrou en forme d'étrier. Celui-ci doit être enclenché sur un bras porte-outils dans la position de transport, en vue d'immobiliser la roue râteleuse. Pour cette opération l'opérateur doit simultanément pivoter la partie repliable et placer la roue râteleuse de telle sorte que ledit enclenchement puisse s'effectuer correctement. Cela requiert une grande attention de la part de l'utilisateur. De plus, l'opération de repliage ne peut être effectuée que manuellement.

Par ailleurs, en raison de la disposition du verrou sur un des bras porte-outils, les moyens de fixation de ce bras ainsi que ses moyens de commande pourraient subir d'importants dégâts au cas ou la roue râteleuse venait à être entraînée en rotation.

Sur une autre machine connue dans la demande de brevet EP-0 622 010, le verrou pour immobiliser la roue râteleuse est logé dans un tube solidaire d'une barre fixée à la structure porteuse. Il est en sus lié à une traverse qui s'étend entre les parties latérales repliables du dispositif de protection. La roue râteleuse comporte un anneau avec des orifices dans lesquels peut s'engager le verrou lorsque les parties latérales du dispositif de protection sont repliées vers le haut.

Ledit engagement n'est cependant possible que lorsque l'utilisateur tourne manuellement la roue râteleuse et la place dans une position où un orifice de l'anneau se situe directement sous le verrou. Le blocage de la roue râteleuse ne peut donc pas s'effectuer automatiquement du fait qu'il nécessite une intervention manuelle de l'utilisateur.

La présente invention a pour but de proposer une machine agricole, notamment une andaineuse de fourrage conforme à celle décrite dans l'introduction, n'ayant pas les inconvénients précités des machines connues.

A cet effet une importante caractéristique de l'invention consiste en ce que le verrou servant à immobiliser la roue râteleuse est logé dans un palier d'un carter de la structure porteuse et que la couronne dentée comporte au moins un orifice dans lequel peut être engagé le verrou sous l'action d'un ressort.

Dans cet agencement la mise en place du verrou s'effectue automatiquement lorsque la ou les parties latérales du dispositif de protection sont relevées et qu'un des orifices de la couronne dentée se présente sous ledit verrou. Cela facilite considérablement le travail de l'opérateur. Il est également possible de prévoir que le repliage de la ou des parties latérales du dispositif de protection soit assuré par un moyen commandé à distance tel qu'un vérin hydraulique.

De plus, étant donné que le verrou bloque directement la couronne dentée qui sert à entraîner la roue râteleuse, les moyens de fixation et/ou les moyens de commande des bras porte-outils ne sont pas sollicités dans le cas d'un enclenchement de l'entraînement de la roue râteleuse alors qu'elle est verrouillée. Dans ce cas, le couple exercé sur le verrou n'est pas trop important, ce qui évite la détérioration dudit verrou et/ou de ses moyens de guidage.

Les moyens de commande du verrou sont agencés de telle sorte que celui-ci puisse bloquer automatiquement la roue râteleuse dès que l'une quelconque des parties latérales repliables du dispositif de protection est relevée et qu'il ne libère ladite roue râteleuse que lorsque toutes les parties latérales sont abaissées.

D'autres caractéristiques et avantages de l'invention ressortiront de la description ci-après d'un exemple de réalisation non limitatif de l'invention, avec référence aux dessins annexés dans lesquels :
- la figure 1 représente une vue de dessus d'une machine selon l'invention en position de travail ;
- la figure 2 représente, à plus grande échelle, une coupe de la roue râteleuse en position de travail ;
- la figure 3 représente une vue de dessus de la machine en position de transport ;
- la figure 4 représente, à plus grande échelle, une coupe de la roue râteleuse en position de transport.

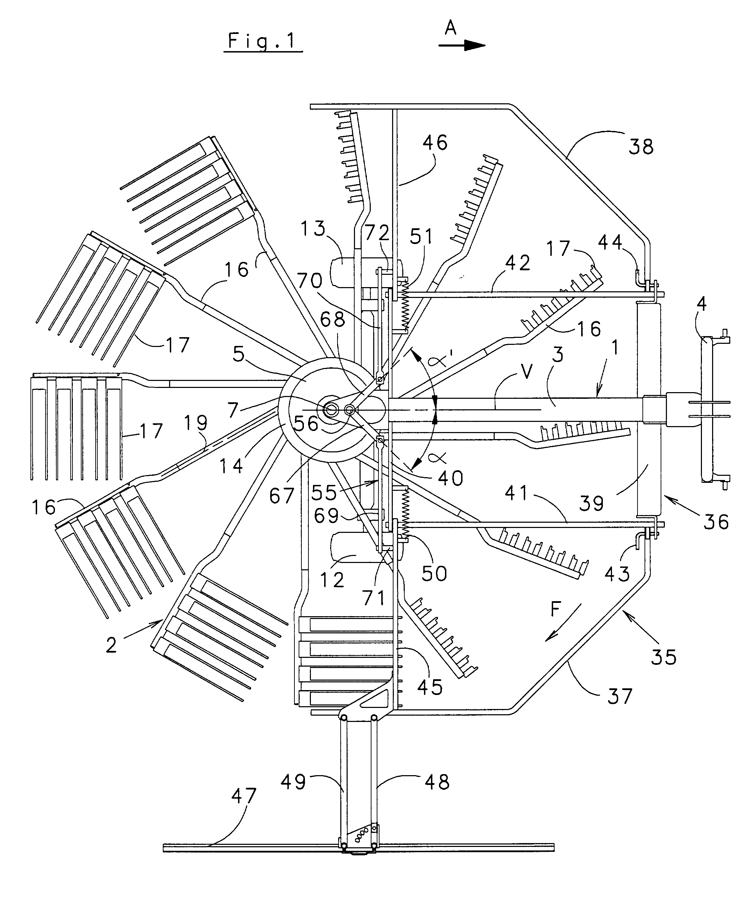

Telle qu'elle est représentée sur les figures 1 à 4, l'andaineuse selon l'invention comporte une structure (1) qui porte au moins une roue râteleuse (2). Ladite structure (1) est constituée par une poutre (3) sensiblement horizontale qui est munie à l'une de ses extrémités d'un chevalet d'attelage trois points (4). Celui-ci permet l'accouplement de l'andaineuse à un tracteur non représenté qui permet de l'animer et de la déplacer dans une direction d'avancement indiquée par la flèche (A). L'autre extrémité de cette poutre (3) porte un carter (5). Celui-ci possède un palier (6) dans lequel est logé un axe support (7) qui est immobilisé en rotation par une clavette (8). Cet axe support (7) est dirigé sensiblement verticalement vers le bas. Il porte à son extrémité inférieure une embase (9) qui est liée à une plaque (10). Celle-ci porte une traverse (11) avec des roulettes (12 et 13) qui peuvent prendre appui sur le sol.

La roue râteleuse (2) est disposée sur l'axe (7) sous le carter (5). Elle possède un boîtier central (14) qui est monté sur ledit axe (7) au moyen de roulements à billes (15) de manière à pouvoir tourner. Ce boîtier central (14) est équipé de plusieurs bras (16) qui s'étendent vers l'extérieur et qui portent à leurs extrémités les plus éloignées des outils de râtelage (17). Ces bras (16) sont montés dans des paliers (18) qui sont liés audit boîtier (14), de manière à pouvoir pivoter autour de leurs axes géométriques longitudinaux (19). Dans le volume intérieur du boîtier (14) se situe une came de commande (20) qui est fixée sur l'axe support (7) à l'aide d'une clavette (21). Chaque bras porte-outils (16) possède une extrémité située à l'intérieur du boîtier (14). Cette extrémité est munie d'un levier (22) avec un galet (23) qui est guidé dans une gorge de la came de commande (20). L'ensemble constitué par le boîtier (14), la came de commande (20) et le carter (5) est maintenu sur l'axe support (7) par un écrou (24) se situant à son extrémité supérieure.

Le boîtier (14) porte à sa face supérieure une couronne dentée (25). Cette couronne dentée (25) est sensiblement horizontale et est située sous le carter (5) de la structure porteuse (1). Elle engrène avec un pignon d'entraînement (26) fixé sur un arbre (27) sensiblement vertical qui est monté au moyen de roulements à billes (28 et 29) dans des paliers du carter (5). Cet arbre (27) porte en sus un pignon conique (30). Celui-ci est lié à l'arbre (27) au moyen d'une clavette (31). Il engrène avec un second pignon conique (32) qui est fixé sur un arbre de transmission (33) sensiblement horizontal. Ce dernier est guidé avec des roulements à billes (34) et s'étend en direction du dispositif d'attelage (4). Il peut être relié à un arbre de prise de force du tracteur auquel est accouplée la machine, à l'aide d'un arbre de transmission intermédiaire.

Le mode de réalisation de la roue râteleuse (2) et/ou de ses moyens d'entraînement peut être différent de celui décrit ci-dessus. Ces moyens d'entraînement peuvent par exemple être constitués par une couronne dentée conique qui est solidaire du boîtier (14) et qui engrène directement avec un pignon d'entraînement fixé sur un arbre de transmission dirigé vers le dispositif d'attelage (4).

L'andaineuse comporte par ailleurs un dispositif de protection (35) qui entoure partiellement la roue râteleuse (2). Celui-ci se compose d'une partie centrale (36) et de deux parties latérales (37 et 38). La partie centrale est constituée par des barres (39 et 40) fixées sur la structure porteuse (1). Les parties latérales (37 et 38) sont articulées sur les barres (39 et 40) de la partie centrale (36) au moyen d'axes (41 et 42) qui sont dirigés dans la direction d'avancement (A). Ces axes (41 et 42) permettent de replier les parties latérales (37 et 38) d'une position horizontale pour le travail jusque dans une position verticale pour le transport. Elles comportent des verrous (43 et 44) qui permettent de les bloquer dans chacune de ces positions. Chacune de ces parties latérales (37 et 38) est formée par un tube coudé. Une première extrémité du tube de chaque partie latérale (37, 38) est solidaire de l'axe d'articulation (41, 42) correspondant et se situe à l'avant de la roue râteleuse (2). La deuxième extrémité du tube de chaque partie latérale (37, 38) se situe latéralement à la roue râteleuse (2). Elle est reliée à l'axe d'articulation (41, 42) correspondant par une traverse (45, 46).

Dans l'exemple représenté sur la figure 1, le dispositif de protection (35) entoure la moitié avant -vu dans la direction d'avancement (A)- de la roue râteleuse (2). Etant donné qu'au travail l'andaineuse est déplacée dans la direction d'avancement (A), il n'y a pratiquement aucun risque qu'une personne ou un obstacle touche la roue râteleuse (2) sur le côté arrière. Il est néanmoins possible de prolonger les tubes qui forment les parties latérales (37 et 38) vers le côté arrière de la roue râteleuse (2), afin qu'ils assurent également une protection sur ce côté. Un déflecteur (47) est relié à la partie latérale (37) du dispositif de protection (35) au moyen de tiges (48 et 49). Ce déflecteur (47) se situe latéralement à la roue râteleuse (2) de manière à limiter la projection latérale du fourrage déplacé. Il est constitué par une grille ou une toile renforcée de forme rectangulaire. Sa hauteur est à peu près égale à celle de la roue râteleuse (2) elle-même.

Des ressorts de traction (50, 51) peuvent être fixés à la barre (40) de la partie centrale (36) et à la traverse (45, 46) de chaque partie latérale (37 et 38) du dispositif de protection (35). Ces ressorts (50 et 51) facilitent les pivotements des parties latérales (37 et 38) autour de leurs axes d'articulation (41 et 42). Il est également possible de monter à la place desdits ressorts de traction (50 et 51) des vérins hydrauliques qui sont alimentés depuis le tracteur. De tels vérins hydrauliques permettent de commander les déplacements des parties latérales (37 et 38) autour des axes (41 et 42) à partir du tracteur.

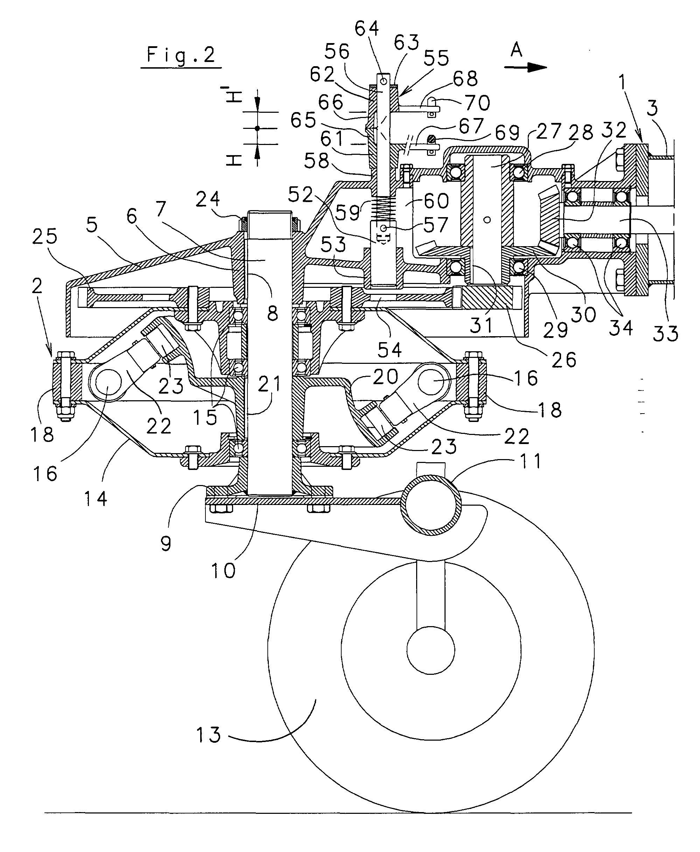

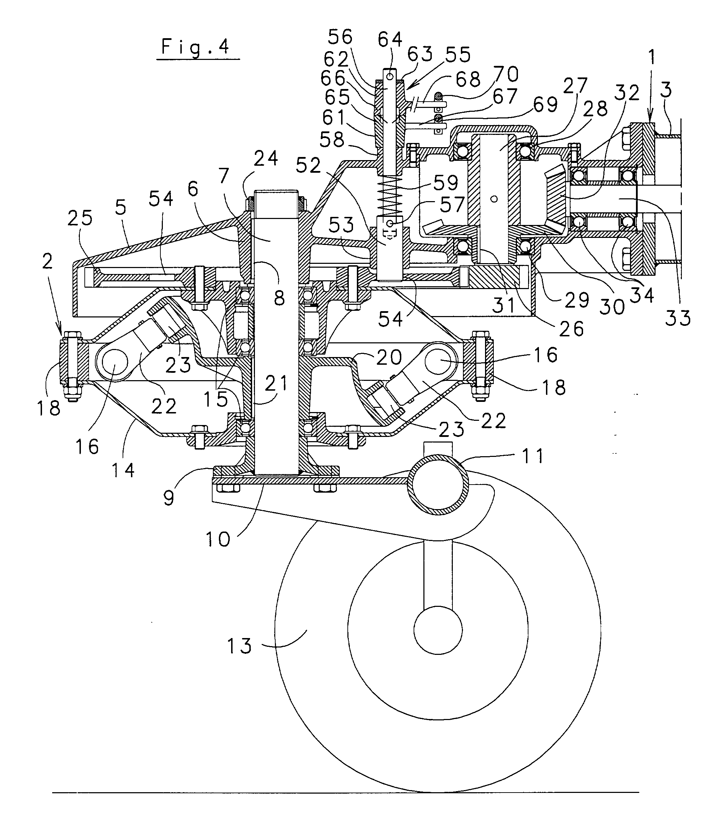

L'andaineuse comporte un verrou (52) servant à immobiliser la roue râteleuse (2) notamment au transport. On voit sur les figures 2 et 4 que ce verrou (52) est constitué par une broche sensiblement verticale qui est logée de manière à pouvoir coulisser dans un palier (53) solidaire du carter (5) de la structure porteuse (1).

La roue dentée (25) comporte au moins un orifice (54), de préférence quatre, pouvant se situer sous le verrou (52). Le diamètre de cet orifice (54) est légèrement supérieur à celui du verrou (52) de manière à faciliter l'engagement de ce dernier dans ledit orifice (54).

Des moyens de commande (55) sont reliés au verrou (52) et à chacune des parties latérales repliables (37 et 38) du dispositif de protection (35). Ces moyens (55) incluent une tige de manoeuvre (56) qui est fixée au verrou (52) à l'aide d'une goupille (57). Cette tige (56) a un diamètre inférieur à celui dudit verrou (52). Elle s'étend vers le haut dans le prolongement de celui-ci et est guidée dans un palier (58) du carter (5) de manière à pouvoir se déplacer longitudinalement. Sur sa partie située entre le palier (58) et le verrou (52), elle est entourée par un ressort de pression (59). Celui-ci pousse la tige de manoeuvre (56) et le verrou (52) vers le bas. Le ressort (59) et le verrou (52) se situent dans une cavité (60) du carter (5) de la structure porteuse (1) et sont ainsi protégés contre les poussières et les brindilles.

L'extrémité supérieure de la tige de manoeuvre (56) dépasse du carter (5). Sur cette extrémité sont montées deux cames (61 et 62). Chacune de celles-ci se compose d'un corps cylindrique ou conique avec un orifice central dont le diamètre est légèrement supérieur à celui de la tige de manoeuvre (56). Ces deux cames (61 et 62) sont engagées sur la tige de manoeuvre (56) de telle sorte qu'elles se situent l'une au-dessus de l'autre et qu'elles aient une de leurs faces en contact. La came inférieure (61) s'appuie contre une butée fixe constituée par le palier de guidage (58). La came supérieure (62) est bloquée vers le haut au moyen d'une rondelle (63) et d'une goupille (64) qui traverse la tige de manoeuvre (56).

Les faces des cames (61 et 62) qui sont en contact l'une avec l'autre comportent chacune une saillie ou éminence (65, 66) en forme de pointe, ayant une hauteur (H, H') et comportant deux côtés formant des rampes. Ces éminences (65 et 66) sont sensiblement identiques. A la moitié de sa hauteur, chacune de ces éminences (65 et 66) s'étend autour de la tige de manoeuvre (56) sur un secteur d'environ 180°. Leurs côtés qui forment des rampes sont inclinés à environ 45°. La hauteur (H, H') des éminences (65, 66) est légèrement supérieure à la longueur de la partie du verrou (52) qui peut être engagée dans un orifice (54) de 1a couronne dentée (25). Elle est cependant inférieure au double de ladite longueur. Le rapport entre la hauteur (H, H') et cette longueur se situe autour de 1,5.

Chaque came (61, 62) comporte un bras (67, 68) qui s'étend radialement. Ces bras (67 et 68) se situent l'un plus haut que l'autre. Ils peuvent par exemple être dirigés vers l'avant et former des angles (α et α') d'environ 45° avec un plan vertical (V) qui est orienté dans la direction d'avancement (A), dans la position de travail. Chacun de ces bras (67 et 68) comporte près de son extrémité extérieure un orifice dans lequel est accroché une tringle (69, 70). Chacune de ces tringles (69 et 70) est accrochée à son autre extrémité à un pivot (71, 72) solidaire d'une des parties latérales repliables (37 et 38) du dispositif de protection (35). L'agencement de ces tringles (69 et 70) est tel que chacune déplace le bras (67, 68) auquel elle est reliée et la came (61, 62) correspondante d'un angle d'environ 90° autour de la tige de manoeuvre (56) lorsque la partie latérale (37 ou 38) correspondante du dispositif de protection (35) est repliée autour de son axe (41 ou 42). En sus, ces déplacements des bras (67 et 68) et des cames (61 et 62) s'effectuent en sens contraires lorsque les deux parties latérales (37 et 38) sont relevées ou lorsqu'elles sont abaissées.

Au travail, la machine est accouplée au moyen du chevalet d'attelage (4), au dispositif de relevage d'un tracteur qui permet de la déplacer dans la direction d'avancement (A). Les roulettes (12 et 13) roulent alors sur le sol. La roue râteleuse (2) est entraînée en rotation dans le sens (F), autour de son axe support (7), à partir de l'arbre de prise de force du tracteur. Cet entraînement s'effectue à travers les arbres (33 et 27), les pignons (32, 30 et 26) et la couronne dentée (25). Par suite de cette rotation, les galets (23) se déplacent dans la gorge de la came de commande (20). Celle-ci commande alors ces galets (23) de telle sorte qu'ils fassent pivoter les bras (16) sur eux-mêmes au moyen des leviers (22). La position de la came (20) est réglée de manière à ce que les fourches (17) des bras (16) soient dirigées vers le sol dans la partie avant de leur trajectoire et qu'elles pivotent vers le haut dans la partie latérale de leur trajectoire dans laquelle les bras (16) se dirigent vers l'arrière par rapport à la direction d'avancement (A). Dans ladite partie avant de leur trajectoire, les fourches (17) ramassent le fourrage sur le sol. Ensuite, elles le déplacent latéralement et le déposent sous la forme d'un andain en raison de leur pivotement vers le haut. Le déplacement latéral du fourrage est limité par le déflecteur (47).

Dans la position de travail, les deux parties latérales (37 et 38) du dispositif de protection (35) sont sensiblement horizontales (voir figure 1). Elles empêchent les personnes ou les animaux d'entrer dans la trajectoire des bras porte-fourches (16). Elles évitent aussi que ces bras (16) rencontrent des obstacles qui pourraient causer d'importants dommages. Comme cela est visible sur la figure 2, l'extrémité inférieure du verrou (52) se situe légèrement au-dessus de la couronne (25) et n'entre pas en contact avec celle-ci lorsqu'elle tourne. Il est maintenu dans cette position par la tige de manoeuvre (56) et les cames (61 et 62). Celles-ci sont positionnées de telle sorte qu'elles soient en contact l'une avec l'autre par les sommets de leurs éminences (65 et 66). La tige de manoeuvre (56) est alors tirée vers le haut et le ressort (59) est comprimé.

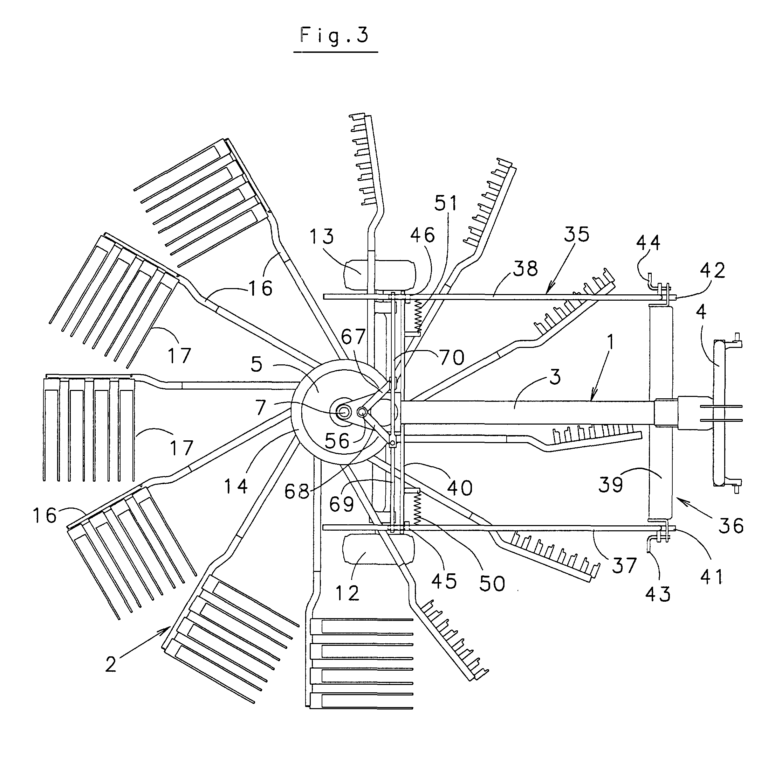

Pour mettre l'andaineuse en position de transport (figures 3 et 4) l'utilisateur arrête l'entraînement en rotation de la roue râteleuse (2). Ensuite, il replie les parties latérales (37 et 38) du dispositif de protection (35) vers le haut, autour de leurs axes (41 et 42), en vue de réduire la largeur de la machine. Lorsque, par exemple il replie en premier lieu la partie latérale (38), celle-ci pousse la tringle (70) vers le côté opposé de la machine. Cette tringle (70) déplace le bras (68) qui fait tourner la came (62) d'un angle d'environ 90°. L'éminence (66) de cette came (62) glisse alors vers le bas sur la rampe de l'éminence (65) de l'autre came (61) jusqu'à ce que son extrémité se situe à peu près à la moitié de la hauteur (H) de cette éminence (65). Simultanément, elle libère partiellement la tige de manoeuvre (56) et le verrou (52) qui se déplacent également vers le bas en raison de la pression du ressort (59). Ledit verrou (52) entre alors partiellement dans un orifice (54) de la couronne dentée (25) ou bute contre la face supérieure de cette dernière. Dans le second cas, il suffira de faire tourner légèrement la roue râteleuse (2) de sorte qu'un des orifices (54) arrive sous le verrou (52) et que ce dernier s'y engage partiellement sous la pression du ressort (59). Dès lors, la roue râteleuse (2) est bloquée.

Ensuite l'utilisateur replie l'autre partie latérale (37) du dispositif de protection (35) vers le haut. Celle-ci déplace la tringle (69) vers le côté opposé de la machine, laquelle tringle (69) pousse le bras (67) qui fait tourner la came (61) d'un angle d'environ 90° autour de la tige de manoeuvre (56). Ce déplacement de la came (61) s'effectue dans le sens contraire à celui de l'autre came (62). Durant ce déplacement l'éminence (65) de la came (61) se place vis à vis de l'éminence (66) de l'autre came (62) (voir figure 4). Cette dernière glisse alors vers le bas et libère complètement la tige de manoeuvre (56) et le verrou (52). Celui-ci s'engage ainsi davantage dans l'orifice (54).

La mise en place du verrou (52), en vue du verrouillage de la roue râteleuse (2), s'effectue de la même manière quelle que soit la partie latérale (37 ou 38) du dispositif de protection (35) qui est repliée en premier lieu dans la position de transport. La sécurité est donc assurée dès le début de l'opération de relevage de ces parties latérales (37 et 38). Ces dernières peuvent être bloquées dans la position de transport au moyen des verrous (43 et 44). Une réduction supplémentaire de la largeur de la machine peut être obtenue en démontant les parties extérieures des bras porte-outils (16).

Pour revenir dans la position de travail, l'utilisateur abaisse l'une après l'autre les parties latérales (37 et 38) du dispositif de protection (35) dans la position horizontale. Lorsqu'il abaisse par exemple en premier la partie latérale (38), celle-ci tire sur la tringle (70) qui fait tourner la came (62) de 90° dans la direction opposée à sa direction de déplacement lors de la mise en position de transport. Son éminence (66) glisse alors sur l'éminence (65) de l'autre came (61) jusqu'à la moitié de la hauteur (H) de celle-ci. Ce faisant, elle se déplace vers le haut et entraîne la tige de manoeuvre (56) et le verrou (52). Toutefois, en raison du rapport entre ladite hauteur (H) et la longueur de la partie du verrou (52) qui est engagée dans l'orifice (54) de la couronne dentée (25), ledit verrou (52) reste partiellement engagé dans l'orifice (54) dans cette position et immobilise encore la roue râteleuse (2).

Lorsque l'utilisateur abaisse la deuxième partie latérale (37), la came (61) est actionnée par la tringle (69) de telle sorte que son éminence (65) se place directement sous l'éminence (66) de l'autre came (62) (voir figure 2). Ceci provoque un soulèvement supplémentaire de la came (62). Celle-ci tire alors la tige de manoeuvre (56) et le verrou (52) vers le haut, à l'encontre du ressort (59), et fait sortir ledit verrou (52) de l'orifice (54). La couronne dentée (25) est ainsi libérée, ce qui permet d'entraîner à nouveau la roue râteleuse (2) en rotation.

Les déplacements de la tige de manoeuvre (56) et du verrou (52) s'effectuent également de la manière décrite ci-dessus lorsque l'utilisateur inverse l'ordre dans lequel il abaisse les parties latérales (37 et 38) du dispositif de protection (35). L'entraînement en rotation de la roue râteleuse (2) n'est en aucun cas possible avant que le dispositif de protection (35) soit correctement en place et assure totalement sa fonction. Les déplacements précités des parties latérales (37 et 38) du dispositif de protection (35) peuvent être effectués manuellement ou selon l'équipement de la machine, au moyen de vérins hydrauliques.

Il est bien évident que l'invention n'est pas limitée au mode de réalisation décrit et représenté sur les dessins annexés. Des modifications restent possibles, notamment en ce qui concerne la constitution des divers éléments ou par substitution d'équivalents techniques, sans sortir pour autant du domaine de protection, défini par les revendications.

## Revendications

1. Machine agricole, notamment une andaineuse de fourrage, comportant une structure (1) portant au moins une roue râteleuse (2), laquelle roue râteleuse (2) possède un boîtier central (14) qui est muni de bras porte-outils (16) et qui est monté sur un axe support (7) sensiblement vertical de manière à pouvoir tourner sur celui-ci, ce boîtier (14) portant une couronne dentée (25) qui engrène avec un pignon d'entraînement (26) en vue d'assurer l'entraînement en rotation, ladite structure (1) portant également un verrou (52) servant à immobiliser la roue râteleuse (2) notamment durant le transport et un dispositif de protection (35) qui entoure partiellement ou totalement ladite roue râteleuse (2) et qui comporte au moins une partie latérale repliable (37, 38), des moyens de commande (55) étant reliés audit verrou (52) et à chacune des parties latérales repliables (37 et 38) du dispositif de protection (35), ***caractérisée par le fait*** que le verrou (52) est logé dans un palier (53) d'un carter (5) de la structure porteuse (1) et que la couronne dentée (25) comporte au moins un orifice (54) dans lequel peut être engagé le verrou (52) sous l'action d'un ressort (59).

2. Machine selon la revendication 1, ***caractérisée par le fait*** que le verrou (52) comporte une tige de manoeuvre (56) qui est guidée dans un palier (58) de manière à pouvoir se déplacer longitudinalement.

3. Machine selon la revendication 2, ***caractérisée par le fait*** que le dispositif de protection (35) comporte deux parties repliables (37 et 38) qui sont articulées au moyen d'axes (41 et 42) sur une partie fixe (36) et que chacune des parties repliables (37 et 38) est reliée par l'intermédiaire d'une tringle (69, 70) à une came (61, 62) montée sur la tige de manoeuvre (56).

4. Machine selon la revendication 1, 2 ou 3, ***caractérisée par le fait*** que les moyens de commande (55) sont agencés de telle sorte que le verrou (52) soit partiellement libéré et puisse s'engager sous l'action du ressort (59) dans un orifice (54) de la couronne dentée (25) de la roue râteleuse (2) dès que l'une quelconque des parties latérales repliables (37, 38) est relevée et que ledit verrou (52) ne soit retiré dudit orifice (54), à l'encontre de la force du ressort (59), que lorsque toutes les parties latérales repliables (37, 38) sont abaissées.

5. Machine selon la revendication 3, ***caractérisée par le fait*** que chaque came (61, 62) comporte un corps cylindrique ou conique avec un orifice ayant un diamètre légèrement supérieur à celui de la tige de manoeuvre (56).

6. Machine selon la revendication 3, 4 ou 5, ***caractérisée par le fait*** que les deux cames (61 et 62) sont montées sur la tige de manoeuvre (56) de telle sorte qu'elles aient une de leurs faces en contact, que l'une (61) de ces cames (61 et 62) s'appuie contre une butée fixe constituée par le palier de guidage (58) et que l'autre came (62) est bloquée au moyen d'un arrêt (63, 64) sur la tige de manoeuvre (56).

7. Machine selon la revendication 6, ***caractérisée par le fait*** que les faces des cames (61 et 62) qui sont en contact l'une avec l'autre comportent chacune une éminence (65, 66) ayant une hauteur (H, H') et comportant deux côtés formant des rampes.

8. Machine selon la revendication 7, ***caractérisée par le fait*** que les éminences (65 et 66) des deux cames (61 et 62) sont sensiblement identiques.

9. Machine selon la revendication 7 ou 8, ***caractérisée par le fait*** que chaque éminence (65, 66) s'étend à la moitié de sa hauteur sur un secteur d'environ 180° autour de la tige de manoeuvre (56).

10. Machine selon l'une quelconque des revendications 7 à 9, ***caractérisée par le fait*** que les côtés des éminences (65 et 66) qui forment des rampes sont inclinés à 45°.

11. Machine selon l'une quelconque des revendications 7 à 10, ***caractérisée par le fait*** que la hauteur (H, H') des éminences (65 et 66) est supérieure à la longueur de la partie du verrou (52) qui est engagée dans un orifice (54) de la roue dentée (25), mais inférieure au double de cette longueur.

12. Machine selon l'une quelconque des revendications 3 à 11, ***caractérisée par le fait*** que chaque came (61, 62) comporte un bras (67, 68) qui s'étend radialement et qui est destiné à l'accrochage de la tringle (69, 70) correspondante.

13. Machine selon la revendication 12, ***caractérisée par le fait*** que chaque partie repliable (37, 38) du dispositif de protection (35) comporte un pivot (71, 72) pour l'accrochage de la tringle (69, 70) correspondante.

14. Machine selon l'une quelconque des revendications 3 à 13, ***caractérisée par le fait*** que chaque came (61 et 62) est déplacée d'un angle d'environ 90° autour de la tige de manoeuvre (56) lors du pivotement de la partie repliable (37 ou 38) correspondante autour de son axe d'articulation (41 ou 42) de telle sorte que leurs éminences (65 et 66) se situent l'une au-dessus de l'autre dans la position de travail et l'une en face de l'autre dans la position de transport.

15. Machine selon la revendication 1 ou 4, ***caractérisée par le fait*** que le ressort (59) est un ressort de pression qui entoure la tige de manoeuvre (56) sur une partie de sa longueur.

16. Machine selon la revendication 15, ***caractérisée par le fait*** que le ressort (59) est placé dans une cavité (60) du carter (5) de la structure porteuse (1).

## Patentansprüche

1. Landmaschine, insbesondere Futterschwader, mit einem Gestell (1), das mindestens ein Rechrad (2) trägt, das ein zentrales Gehäuse (14) aufweist, welches mit Werkzeugtragarmen (16) versehen und an einer im wesentlichen vertikalen Stützachse (7) so angebracht ist, daß es sich um diese drehen kann, wobei dieses Gehäuse (14) einen Zahnring (25) aufweist, der mit einem Antriebsritzel (26) in Eingriff steht, um den Drehantrieb zu gewährleisten, wobei das Gestell (1) des weiteren einen Riegel (52), der zur Verriegelung des Rechrads (2), insbesondere beim Transport, dient, und eine das Rechrad (2) teilweise oder vollständig umgebende Schutzvorrichtung (35), die mindestens einen klappbaren Seitenteil (37, 38) enthält, aufweist, wobei Steuermittel (55) mit dem Riegel (52) und jedem der klappbaren Seitenteile (37 und 38) der Schutzvorrichtung (35) verbunden sind, ***dadurch gekennzeichnet***, daß der Riegel (52) in einem Lager (53) eines Kastens (5) des Traggestells (1) untergebracht ist und daß der Zahnring (25) mindestens eine Öffnung (54) enthält, in die der Riegel (52) unter Wirkung einer Feder (59) in Eingriff gebracht werden kann.

2. Maschine nach Anspruch 1, ***dadurch gekennzeichnet***, daß der Riegel (52) eine Betätigungsstange (56) aufweist, die in einem Lager (58) so geführt wird, daß sie sich in Längsrichtung bewegen kann.

3. Maschine nach Anspruch 2, ***dadurch gekennzeichnet***, daß die Schutzvorrichtung (35) zwei klappbare Teile (37 und 38) enthält, die mittels Achsen (41 und 42) an einem festen Teil (36) angelenkt sind, und daß jeder der klappbaren Teile (37 und 38) mittels einer Stange (69, 70) mit einer an der Betätigungsstange (56) angebrachten Kurve (61, 62) verbunden ist.

4. Maschine nach Anspruch 1, 2 oder 3, ***dadurch gekennzeichnet***, daß die Steuermittel (55) so angeordnet sind, daß der Riegel (52) teilweise freigegeben wird und unter der Wirkung der Feder (59) in eine Öffnung (54) des Zahnrings (25) des Rechrads (2) eingreifen kann, sobald irgendeiner der klappbaren Seitenteile (37, 38) angehoben ist, und der Riegel (52) erst dann gegen die Kraft der Feder (59) aus der Öffnung (54) herausgezogen wird, wenn alle klappbaren Seitenteile (37, 38) abgesenkt sind.

5. Maschine nach Anspruch 3, ***dadurch gekennzeichnet***, daß jede Kurve (61, 62) einen zylindrischen oder konischen Körper mit einer Öffnung aufweist, deren Durchmesser etwas größer ist als der der Betätigungsstange (56).

6. Maschine nach Anspruch 3, 4 oder 5, ***dadurch gekennzeichnet***, daß die beiden Kurven (61 und 62) so an der Betätigungsstange (56) angebracht sind, daß sie sich an einer ihrer Flächen berühren, daß eine (61) dieser Kurven (61 und 62) an einem von dem Führungslager (58) gebildeten festen Anschlag anliegt und daß die andere Kurve (62) mittels eines Halteglieds (63, 64) an der Betätigungsstange (56) blockiert ist.

7. Maschine nach Anspruch 6, ***dadurch gekennzeichnet,*** daß die Flächen der Kurven (61 und 62), die miteinander in Berührung stehen, jeweils eine Erhöhung (65, 66) mit einer Höhe (H, H'), die zwei Rampen bildende Seiten aufweist, enthalten.

8. Maschine nach Anspruch 7, ***dadurch gekennzeichnet,*** daß die Erhöhungen (65 und 66) der beiden Kurven (61 und 62) im wesentlichen identisch sind.

9. Maschine nach Anspruch 7 oder 8, ***dadurch gekennzeichnet***, daß sich jede Erhöhung (65, 66) auf der Hälfte ihrer Höhe über einen Sektor von ca. 180° um die Betätigungsstange (56) herum erstreckt.

10. Maschine nach irgend einem der Ansprüche 7 bis 9, ***dadurch gekennzeichnet***, daß die Seiten der Erhöhungen *(65* und 66), die Rampen bilden, um 45° geneigt sind.

11. Maschine nach irgend einem der Ansprüche 7 bis 10, ***dadurch gekennzeichnet***, daß die Höhe (H, H') der Erhöhungen (65 und 66) größer als die Länge des Teils des Riegels (52), der in eine Öffnung (54) des Zahnrads (25) eingreift, aber kleiner als das Doppelte dieser Länge ist.

12. Maschine nach irgend einem der Ansprüche 3 bis 11, ***dadurch gekennzeichnet,*** daß jede Kurve (61, 62) einen Arm (67, 68) aufweist, der sich radial erstreckt und für das Einhaken der entsprechenden Stange (69, 70) bestimmt ist.

13. Maschine nach Anspruch 12, ***dadurch gekennzeichnet***, daß jeder klappbare Teil (37, 38) der Schutzvorrichtung (35) einen Drehzapfen (71, 72) zum Einhaken der entsprechenden Stange (69, 70) enthält.

14. Maschine nach irgend einem der Ansprüche 3 bis 13, ***dadurch gekennzeichnet***, daß jede Kurve (61 und 62) beim Schwenken des entsprechenden klappbaren Teils (37 oder 38) um seine Gelenkachse (41 oder 42) in einem Winkel von ca. 90° um die Betätigungsstange (56) verschoben wird, so daß sich ihre Erhöhungen (65 und 66) in Arbeitsstellung übereinander befinden und in Transportstellung einander gegenüberliegen.

15. Maschine nach Anspruch 1 oder 4, ***dadurch gekennzeichnet***, daß es sich bei der Feder (59) um eine Druckfeder handelt, die die Betätigungsstange (56) über einen Teil ihrer Länge umgibt.

16. Maschine nach Anspruch 15, ***dadurch gekennzeichnet***, daß die Feder (59) in einem Hohlraum (60) des Kastens (5) des Traggestells (1) angeordnet ist.

## Claims

1. Agricultural machine, particularly a windrower for forage, comprising a structure (1) carrying at least one raking wheel (2), which raking wheel (2) has a central casing (14) equipped with tool-carrying arms (16) and is mounted on a substantially vertical support axis (7) so that it can rotate thereon, this casing (14) carrying a toothed ring (25) which meshes with a drive pinion (26) to provide rotational drive, said structure (1) also carrying a bolt (52) which serves to immobilise the raking wheel (2) particularly during transport and a protecting device (35) which partially or completely surrounds the said raking wheel (2) and comprises at least one foldable lateral part (37, 38), operating means (55) being connected to the said bolt (52) and to each of the foldable lateral parts (37 and 38) of the protecting device (35), ***characterized in* that** the bolt (52) is housed in a bearing (53) of a gearbox (5) of the carrying structure (1) and that the toothed ring (25) has at least one orifice (54) in which the bolt (52) can engage under the action of a spring (59).

2. Machine according to Claim 1, ***characterized in* that** the bolt (52) comprises an operating rod (56) which is guided in a bearing (58) so that it can move longitudinally.

3. Machine according to Claim 2, ***characterized in* that** the protecting device (35) comprises two foldable parts (37 and 38) which are articulated by means of axes (41 and 42) to a fixed part (36) and in that each of the foldable parts (37 and 38) is connected by a linkage (69, 70) to a cam (61, 62) mounted on the operating rod (56).

4. Machine according to Claim 1, 2 or 3, ***characterized in* that** the operating means (55) are arranged in such a way that the bolt (52) is partially released and can, under the action of the spring (59), engage in an orifice (54) in the toothed ring (25) of the raking wheel (2) as soon as any one of the foldable lateral parts (37, 38) is lifted up and that the said bolt (52) is not withdrawn from the said orifice (54) against the force of the spring (59) until all the foldable lateral parts (37, 38) are lowered.

5. Machine according to Claim 3, ***characterized in* that** each cam (61, 62) has a cylindrical or conical body with an orifice which has a diameter slightly greater than that of the operating rod (56).

6. Machine according to Claim 3, 4 or 5, ***characterized in* that** the two cams (61 and 62) are mounted on the operating rod (56) in such a way that they have one of their faces in contact, that one (61) of these cams (61 and 62) presses against a fixed stop consisting of the guide bearing (58) and that the other cam (62) is immobilized by means of a stop (63, 64) on the operating rod (56).

7. Machine according to Claim 6, ***characterized in* that** the faces of the cams (61 and 62) which are in contact with one another each have a protrusion (65, 66) of height (H, H') comprising two sides forming ramps.

8. Machine according to Claim 7, ***characterized in* that** the protrusions (65 and 66) of the two cams (61 and 62) are substantially identical.

9. Machine according to Claim 7 or 8, ***characterized in* that** each protrusion (65, 66) extends at half of its height over a sector of about 180° about the operating rod (56).

10. Machine according to any one of Claims 7 to 9, ***characterized in* that** the sides of the protrusions (65 and 66) which form ramps are inclined at 45°.

11. Machine according to any one of Claims 7 to 10, ***characterized in* that** the height (H, H') of the protrusions (65 and 66) is greater than the length of the part of the bolt (52) which is engaged in an orifice (54) of the toothed ring (25) but less than twice this length.

12. Machine according to any one of Claims 3 to 11, ***characterized in* that** each cam (61, 62) has an arm (67, 68) which extends radially and which is intended to catch on the corresponding linkage (69, 70).

13. Machine according to Claim *12,* ***characterized in* that** each foldable part (37, 38) of the protecting device (35) has a pivot (71, 72) for catching on the corresponding linkage (69, 70).

14. Machine according to any one of Claims 3 to 13, ***characterized in* that** each cam (61 and 62) is moved to an angle of about 90° about the operating rod (56) as the corresponding foldable part (37 or 38) pivots about its axis of articulation (41 or 42) so that their protrusions (65 and 66) lie one above the other in the work position and one facing the other in the transport position.

15. Machine according to Claim 1 or 4, ***characterized in* that** the spring (59) is a pressure spring surrounding the operating rod (56) over part of its length.

16. Machine according to Claim 15, ***characterized in* that** the spring (59) is placed in a cavity (60) of the gearbox (5) of the carrying structure (1).
